(19) Europäisches Patentamt / European Patent Office / Office européen des brevets

(11) **EP 2 733 562 B1**

(12) **EUROPEAN PATENT SPECIFICATION**

(45) Date of publication and mention
of the grant of the patent:
**03.08.2022 Bulletin 2022/31**

(21) Application number: **12811034.3**

(22) Date of filing: **16.05.2012**

(51) International Patent Classification (IPC):
**G05D 3/12** *(2006.01)*      **H05K 13/04** *(2006.01)*
**G05B 19/401** *(2006.01)*      **G05B 19/402** *(2006.01)*

(52) Cooperative Patent Classification (CPC):
**G05B 19/402; G05B 19/401;** G05B 2219/25405;
G05B 2219/34387; G05B 2219/34391;
G05B 2219/41192

(86) International application number:
**PCT/JP2012/062525**

(87) International publication number:
**WO 2013/008530 (17.01.2013 Gazette 2013/03)**

(54) **TRIGGER EMISSION DEVICE**

TRIGGEREMISSIONSVORRICHTUNG

DISPOSITIF D'ÉMISSION d'un signal de déclenchement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2011 JP 2011153356**

(43) Date of publication of application:
**21.05.2014 Bulletin 2014/21**

(73) Proprietor: **FUJI Corporation
Chiryu
Aichi (JP)**

(72) Inventor: **KATO Naohiro
Chiryu
Aichi (JP)**

(74) Representative: **Grünecker Patent- und
Rechtsanwälte
PartG mbB
Leopoldstraße 4
80802 München (DE)**

(56) References cited:
WO-A1-2006/025800      JP-A- 8 194 541
JP-A- 10 013 394      JP-A- 2010 044 449
JP-A- 2010 044 449      US-A- 4 166 246

# Description

## TECHNICAL FIELD

This invention relates to a trigger signal generating device which gives instructions on operation to an external device operated in synchronization with a servo motor.

## BACKGROUND OF THE TECHNOLOGY

A system which needs a position-controlling for a servo system or the like is frequently operated by performing synchronization with an external device. An example of the invention relating to the trigger signal generating devices which gives instructions on operation to an external device operated in synchronization with a servo motor is disclosed and known, for example in the Patent Documents 1 and 2. The invention according to the Patent document 1 discloses a prediction of an arrival position (trigger position) of the external device based on a linear position data which has been converted from a stepped output signal of the encoder to a linear output signal. According to this structure, the reading errors of the output signal of the encoder have been minimized thereby to improve the output accuracy of the trigger signal compared to the reading of the stepped output signal.

According to the invention disclosed in the Patent Document 2, the prediction of the arrival position (trigger position) of the external device by calculating the velocity and the acceleration speed of the moving external device at certain sampled timings of the encoder. Thus the time required for arriving to the arrival position is presumed and the trigger signal is outputted to the external device after the presumed required time period passed.

## DOCUMENT LIST OF STATE OF ART

## PATENT DOCUMENT

Patent Document 1: JP8-194541 A
Patent Document 2: JP2010-44449 A

## DISCLOSURE OF INVENTION

## PROBLEMS TO BE SOLVED

According to the device described in the above Patent Document 1, however, the output signal of the encoder is converted to a linear position data as a linear interpolation and consideration on the required time period for arriving to the arrival position of the external device is not made. Further, according to the invention described in the Patent Document 2, consideration on the calculation time necessary for calculating the required time period has been made, but the delay time at the external device side from the output of the trigger signal to the time that the external device is actually operated has, not been considered. For these reasons, the inventions disclosed in the Patent Document 1 and the Patent Document 2 do not sufficiently improve the output accuracy of the trigger signal to the external device.

Particularly, it is necessary for a component mounting device to confirm whether an electronic part is in accurate suctioned state or not by taking an image of the electronic part arrived at the arrival position after being moved thereto with a high speed. It is necessary for such component mounting device to more improve the output accuracy of the trigger signal in order to accurately take the image of the electronic part at a predetermined position.

The present invention was made in consideration with the above problems/issues and the object of the invention is to provide a system comprising a trigger signal generating device which can highly accurately output a trigger signal which gives instructions on operation to an external device operated in synchronization with the servo motor.

## MEANS FOR SOLVING THE PROBLEM

The invention is set out in the appended independent claim. Further embodiments of the invention are set out in the dependent claims.

## THE EFFECTS OF THE INVENTION

According to the system comprising the trigger signal generating device associated with the appended independent claim, the timer setting time is set in consideration of the external device side delay time, as well as the servo side delay time. Accordingly, the operation of the external device can be started with high accuracy at the operation starting position of the external device.

## BRIEF EXPLANATION OF ATTACHED DRAWINGS

Fig. 1 is a schematic view of the first embodiment of the invention;
Fig. 2 is a control block diagram according to the first embodiment of the invention;
Fig. 3 is a block diagram showing one example of the trigger signal generating device;
Fig. 4 is a flowchart showing one example of the trigger signal generating device;
Fig. 5 is a graph showing a relationship between the timer setting value and the output timing of the trigger signal;
Fig. 6 is a control block diagram according to the second embodiment of the invention;
Fig. 7 is a perspective view of an example of the component mounting device;

Fig. 8 is a perspective view of an example of the component mounting head;

Fig. 9 is a view showing "A" arrow direction of Fig. 8; and

Fig. 10 is a view showing an example of an image showing a side surface.

THE EMBODIMENTS FOR IMPLEMENTING THE INVENTION

The embodiments of the invention will be explained with references to the attached drawings and each part or component in respective embodiments is referred to with the same reference numeral or symbol and the explanation which may be overlapped will be abbreviated. Further, it is noted that the drawings are illustrated as conceptual and the size for detail structure is not defined.

(1) FIRST EMBODIMENT

(1-1) Servo system

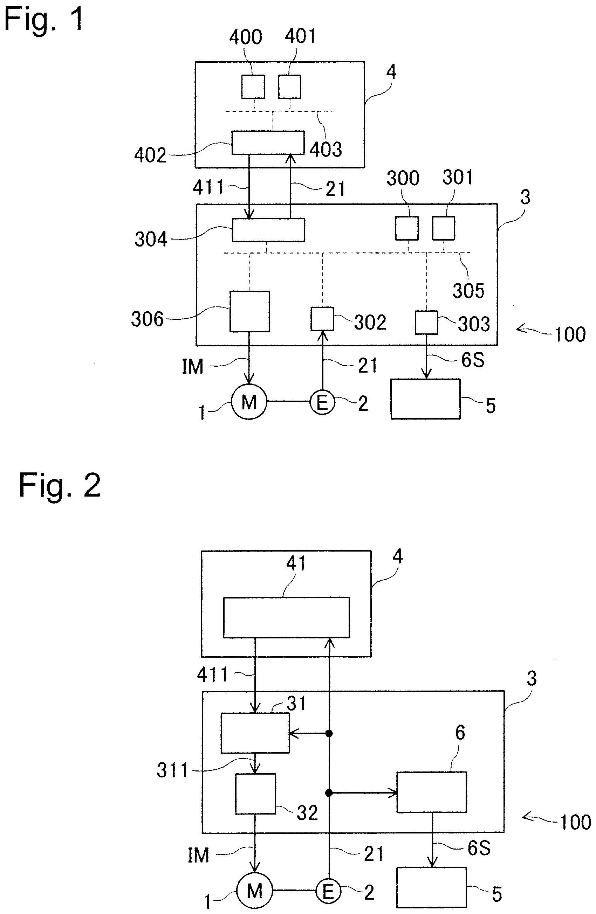

Fig. 1 is a view showing schematically a structure of the embodiment. The servo system 100 of the embodiment includes a servo motor 1, a position detecting device 2 for detecting the position of the servo motor 1, a servo drive 3 for driving the servo motor 1 and a servo controller 4 for controlling the servo drive 3. The servo motor 1 is equipped with the position detecting device 2 which synchronizes with the rotation of the servo motor 1 and outputs the position information 21 of the servo motor 1. Any conventional devices usually used in a numerical control machine may be used as the servo motor 1 and the position detecting device 2. For example, an AC servo motor and an encoder may be used. When using an incremental encoder, the position information 21 is a countable number of values which is a result of counting pulse train in response to the rotational displacement amount of the servo motor 1. When an absolute encoder is used, the position information is represented as an output code in response to the rotational displacement amount of the servo motor 1. The position information may include any data such as error information and is sent to the servo drive 3 with a predetermined cycle.

The servo drive 3 includes a CPU 300, a memory 301, an input/output interface 302, 303 and a communication interface 304 which are mutually connected with each other via a bus 305 for transmitting or receiving various data and control signals. The position information 21 sent from the position detecting device 2 is transmitted to the input/output interface (input interface 302) and the memory 301 through the bus 305. The CPU 300 transmits the position information 21 to the servo controller 4 via the bus 305 and the communication interface 304.

The servo controller 4 includes a CPU 400, a memory 401 and a communication interface 402 which are mutually connected by a bus 403 for transmitting or receiving various data and control signals. The position information 21 received from the servo device 3 is sent to the memory 401 via the communication interface 402 and the bus 403. Further, moving instructions 411 for the servo motor 1 calculated at the CPU 400 is sent to the memory 301 of the servo drive 3 via the communication interfaces 402, 304 and the bus 305. The communication interfaces 402 and 304 are communicably connected for transmitting or receiving various data and the control signals such as the position information 21 and moving instructions (instructions on movement) 411. The communication media or protocol is not particularly defined and either serial or parallel communication may be used. A network may be structured by a servo network which will be explained later.

It is noted that the input/output data such as the position information 21 can be transmitted by a DMA (Direct Memory Access). By using the DMA, various data can be transmitted or received directly between the input/output device and the memory 301 and 401 without using the CPU 300 and 400. For example, the position information 21 can be directly transmitted or received between the position detecting device 2 and the respective memories 301 and 401.

Fig. 2 shows a control block diagram according to the embodiment. As a control block, the servo controller 4 includes a calculating portion 41 for calculating the moving instructions 411 of the servo motor 1. The servo drive 3 includes a servo control portion 31 which controls the position and speed, a servo drive portion 32 for driving the servo motor 1 and a trigger signal generating device 6 which gives instructions on operation to the external device 5 operated in synchronization with the servo motor 1. The servo control portion 31 controls the position and the speed based on the moving instructions 411 from the servo controller 4 and the position information 21 from the position detecting device 2. The method for controlling the speed or the position is not specifically limited and any existing known feedback control such as PID control can be used.

The servo drive portion 32 generates a drive signal which is an electric current instruction of the servo motor 1 based on the calculated output 311 of the position and the speed control. The drive signal is generated by PWM control and is represented by a duty ratio which is a ratio between the ON width and OFF width of pulse in PWM control. According to the PWM control, when a switching element is ON, the motor current IM flows in the corresponding phase and the motor current IM changes according to the time during the element being kept ON (On width). Longer the ON width of pulse, larger the motor current IM becomes and 1. On the other hand, shorter the ON width, smaller the motor current IM becomes. The servo drive portion 32 drives the servo motor 1 by supplying the servo motor 1 with the motor current IM based on the driver signal from an electric power converter device 306 such as inverter.

According to this embodiment of the invention, the servo drive 3, the servo controller 4 and the trigger signal generating device 6 and the position detecting device 2 are mutually communicably connected for receiving the position information 21 of the servo motor 1 and accordingly, the position information 21 can be shared commonly between the servo drive 3, the servo controller 4 and the trigger signal generating device 6. Accordingly, the calculation function, provided in the trigger signal generating device 6, can be achieved at the servo drive 3 or the servo controller 4. Further, since the trigger signal generating device 6 is provided at the servo drive 3, the position information 21 of the servo motor 1 can be taken with a shorter time than the case that the trigger signal generating device is provided in the servo controller 4. This can shorten the servo side delay time T2 which will be explained later in detail.

(Modified Embodiment)

According to the servo system 100 illustrated in Figs. 1 and 2, single servo motor 1 is shown. However, a plurality of servo motors can be employed to control the motors simultaneously. Since the position information 21 is commonly shared by the servo drive 3, servo controller 4 and the trigger signal generating device 6, even the plurality of servo motors 1 is provided in the system, each servo motor 1 can be mutually easily synchronized with one another. The servo control portion 31 can be provided at the servo controller 4. In this case, the position information 21 of the servo motor 1 is directly inputted to the servo controller 4 and is sent to the servo drive 3 from the servo controller 4. The servo controller 4 controls the position and the speed of the motor based on the moving instructions 411 of the servo motor 1 and the position information 21 from the position detecting device 2 and based on the calculated output 311 of the position and the speed controls, a torque instruction is generated. The torque instruction is transmitted to the servo drive 3 and the servo drive portion 32 generates the drive signal which is an electric current instruction of the servo motor 1 based on the torque instruction. The servo drive portion 32 drives the servo motor 1 by supplying the servo motor 1 with the motor current IM based on the drive signal from the electric power converter 306 such as inverter.

(1-2) Trigger signal generating device

The trigger signal generating device 6 outputs trigger signal 6S to give instructions on operation to the external device 5 which is operated in synchronization with the servo motor 1. The trigger signal 6S is outputted to the external device 5 after being calculated at the CPU 300 via the bus 305 and input/output interface (output interface 303). The external device 5 is the subject to be controlled which is operated in synchronization with the servo motor 1. For example, a transfer device or a component mounting device is an example of such external device for this invention, but not limited thereto. According to the embodiment, the trigger signal generating device 6 is provided in the servo drive 3, but may be provided in the servo controller 4.

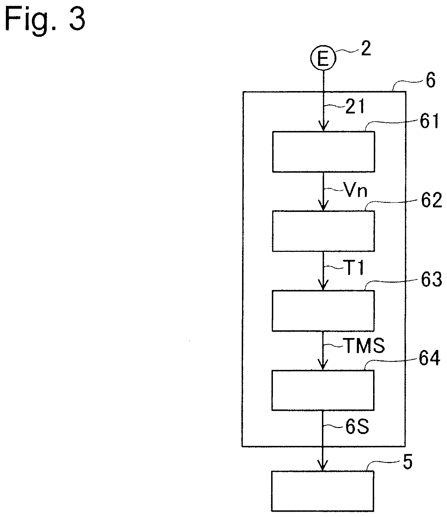

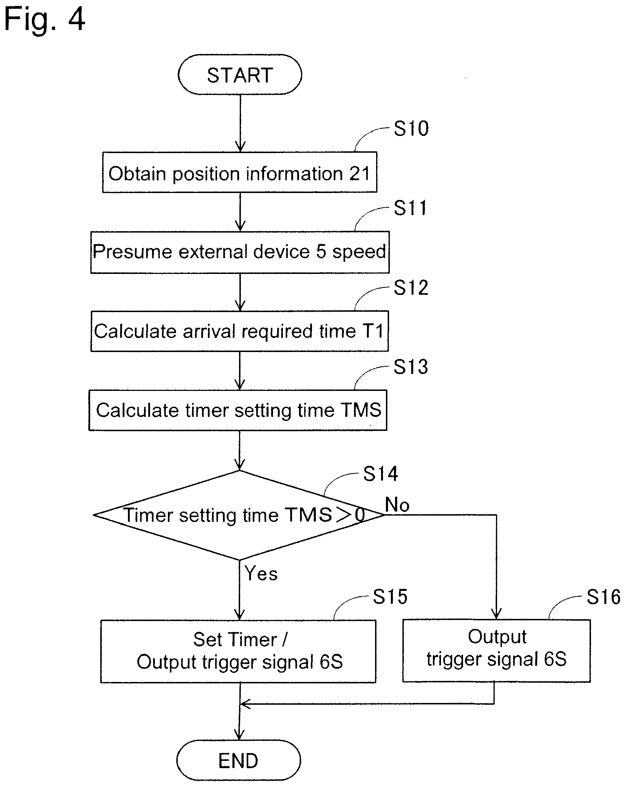

Fig. 3 shows a block diagram of an example of the trigger signal generating device 6 and Fig. 4 is a flowchart for controlling the trigger signal generating device 6. As a control block shown in Fig. 3, the trigger signal generating device 6 includes a speed presuming portion 61, arrival required time calculating portion 62, a timer setting time calculating portion 63 and a trigger signal outputting portion 64. The trigger signal 6S is outputted by execution of a program stored in the memory 301 shown in Fig. 1.

The program is repeatedly executed per predetermined time period (hereinafter referred to as control cycle) according to the flowchart shown in Fig. 4. In detail, at the step S10, the position information 21 is obtained and at the step S11, the speed of the external device 5 is presumed, at the step S12, the arrival required time T1 is calculated, at the step S13, the timer setting time TMS is calculated and at the step S14, the timer setting time TMS is judged. According to the result of the judgment at the step S14, the timer setting and trigger signal 6S outputting are executed at the step S15 or outputting of the trigger signal 6S is executed at the step S16. The obtaining of the position information 21 at the step S10 and the presuming the speed of the external device 5 at the step S11 are executed by the speed presuming portion 61. The calculation of the arrival required time $T1$ at the step S13 is executed by the arrival required time calculating portion 62 and the timer setting time and the trigger signal outputting at the steps S14 through S16 are executed by the trigger signal outputting portion 64.

The speed presuming portion 61 presumes the moving speed Vn of the external device 5 at a sampling time Tp of the position detecting device 2 based on the position information 21 of the servo motor 1. The position information 21 of the servo motor 1 where the sampling is started at the time Tp needs a later explained delay time so that the position information can be able to be used for calculation. At the time Tn delayed from the time Tp, the position information 21 of the servo motor 1 obtained by the speed presuming portion 61 is defined to be the position Pn. At the time Tm delayed from the time Tk which corresponds to the time one sampling cycle before, the position information 21 of the servo motor 1 obtained by the speed presuming portion 61 is defined to be the position Pm. The moving speed Vn of the external device 5 at the sampling time Tp can be represented as the following mathematical expression (M1):

(M1)

$$Vn = (Pn - Pm) / (Tn - Tm)$$

The arrival required time calculating portion 62 calculates the arrival required time T1 which is the time that the external device 5 reached at the operation starting position PS using the presumed moving speed Vn. Assuming that the external device 5 moves at a constant speed represented as Vn, the arrival required time T1 can be represented as the following mathematical expression (M2)

$$(M2)$$

$$T1 = (Ps - Pn) / Vn$$

The timer setting time calculating portion 63 calculates the timer setting time TMS by subtracting the servo side delay time T2 and the external device side delay time T3 from the arrival required time T1. The servo side delay time T2 is defined to be the time from the sampling starting time of the position detecting device 2 until the timer setting time TMS which generates the trigger signal 6S is calculated. The external device side delay time T3 is defined to be the time from the that the trigger signal generating device 6 outputs the trigger signal 6S until the time that the external device 5 started operation. Both the servo side delay time T2 and the external device side delay time T3 are the fixed time defined by the servo system 100 and accordingly, such times can be measured or calculated in advance. The external device side delay time T3 may be set to be variable depending on the operation mode of the external device 5. The timer interrupt cycle can be set to be several $\mu$s assuming that the control cycle is tens of $\mu$s. By thus setting, the trigger signal 6S can be accurately outputted after the timer setting time TMS elapsed even the timer setting time TMS is shorter than the control cycle.

The trigger signal outputting portion 64 outputs the trigger signal 6S based on the timer setting time TMS. For example, the trigger signal outputting portion 64 outputs the trigger signal 6S after the timer setting time TMS elapsed when the timer setting time is a positive value and outputs the trigger signal 6S immediately after the calculation of the timer setting time TMS when the timer setting time TMS is zero or a negative value.

According to this embodiment, the trigger signal 6S is outputted after the timer setting time TMS elapsed when the timer setting time TMS is a positive value. Therefore, the operation of the external device 5 can be started at a desired operation starting position PS. Further, the trigger signal 6S is outputted immediately after the timer setting time TMS was calculated when the timer setting time TMS is zero or a negative value. Therefore, the instructions on starting of operation of the external device 5 can be given quickly thereto.

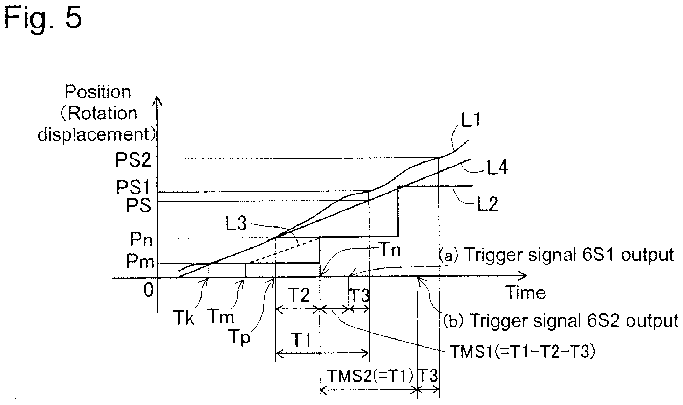

Fig. 5 is a graph showing the relationship between the timer setting value and the output timing of the trigger signal. The curve line L1 represents an example of rotation displacement of the servo motor 1 and the curve line L2 represents an example of the position information 21 of the servo motor 1 detected by the position detecting device 2. The position information 21 is renewed every sampling cycle of the position detecting device 2 and accordingly, the curve line L2 is shown as a stepped line.

A line segment L3 is defined by a line connecting between the position Pn at the time Tn delayed from the sampling time Tp and the position Pm at the time Tm delayed from the time Tk which corresponds to the time one sampling cycle before. The inclination of the line segment L3 indicates the moving speed Vn of the external device 5 at the sampling time Tp. The straight line L4 has the inclination same as that of the line segment L3 and passes the position Pn at the time Tp. The servo motor 1 at the position Pn at the time Tp is predicted to arrive at the desired operation starting position PS after the arrival required time T1 passed from the time Tp.

A predetermined time is needed for detection and procedure from starting sampling by the position detecting device 2 at the time Tp to the generation of the position information 21 of the servo motor 1 after sampling being finished. Further, a predetermined time is needed for communication until the detected position information 21 is sent to the servo drive 3. Still further, a predetermined time is necessary from the time when the speed presuming portion 61 obtained the position information until the time when the speed presuming portion 61, the arrival required time calculating portion 62 and the timer setting time calculating portion 63 completed each calculation. Thus, the servo side delay time T2 is necessary which is defined by the time period from the sampling starting by the position detecting device 2 until the timer setting time TMS generating the trigger signal 6S completes the calculation thereof.

Similarly, the external device side delay time T3 is necessary which is defined by the time period from the outputting of trigger signal 6S by the trigger signal generating device 6 until the external device 5 starts operation. For example, the image taking means of the component mounting device generates a delay such as a communication delay or an operation delay at the drive portion from the outputting of the image taking starting signal until actually the image of the subject was taken. In order to accurately take an image of the subject which is moving at a high speed at the predetermined position, such delay time is not negligible. According to this embodiment of the invention, the timer setting time TMS is set considering the external device side delay time T3 in addition to the servo side delay time T2. Therefore, the operation of the external device 5 can be highly accurately started at the desired operation starting position PS.

In Fig. 5, (a) indicates the case that the timer setting time TMS1 is calculated by subtracting the servo side delay time T2 and the external device side delay time T3 from the arrival required time T1 and Fig. 5(b) indicates the case that the timer setting time TMS2 is set to the arrival required time T1. In the case of (a), the trigger signal 6S1 is outputted after the timer setting time TMS1 elapsed and after the outputting of the trigger signal 6S1 and further after the external device side delay time T3 elapsed therefrom, the external device 5 actually starts operation. The operation starting position of the external device 5 is set to the position PS1. On the other hand, in the case (b), the trigger signal 6S2 is outputted after the timer setting time TMS2 elapsed and further after the external device side delay time T3 elapsed the external device 5 actually starts. In this case the position of the operation starting of the external device 5 is the position PS2. The position PS1 in the case (a) is closer to the desired operation starting position PS than the position PS2 in the case (b).

(Modified Embodiment)

According to this modified embodiment, comparing the structure of the first embodiment, the speed presuming portion 61 and the arrival required time calculating portion 62 are different. According to this modified embodiment, the moving acceleration speed "An" is presumed from the moving speed Vn of the external device 5. Assuming that the external device 5 moves at the moving acceleration speed "An" at the constant acceleration speed, the arrival required time T1 is calculated.

When the moving speed of the external device 5 calculated at the time Tn delayed from the time Tp is defined as "Vn", and the moving speed of the external device 5 calculated at the time Tm delayed from the time Tk which corresponds to the time one sampling cycle before is defined as "Vm", the moving acceleration speed An can be calculated by the following mathematical expression (M3) as follows:

$$(M3)$$

$$An = (Vn - Vm) / (Tn - Tm)$$

The motion with the constant acceleration can be represented by the following mathematical expression (M4) and accordingly, the arrival required time T1 can be calculated by the expression (M4):

$$Vn \times T1 + An \times T1^2 / 2 = PS - Pn$$

Further, when the subject moving approximately at a constant speed, such as the transfer device, the moving speed Vn at the time Tn can be corrected using a digital filter such as, for example, an FIR filter. For example, when the moving speed Vn calculated at the time Tn exceeds a predetermined range, the moving speed Vn at the time Tn can be corrected to the value multiplying the moving speed Vn calculated in the past, by a value of the digital filter. Thus, the presumed error due to noise or the like can be minimized. It is noted that the FIR filter can be relatively easily realized by calculating the moving average speed of a number of immediate moving speeds Vn.

(2) SECOND EMBODIMENT

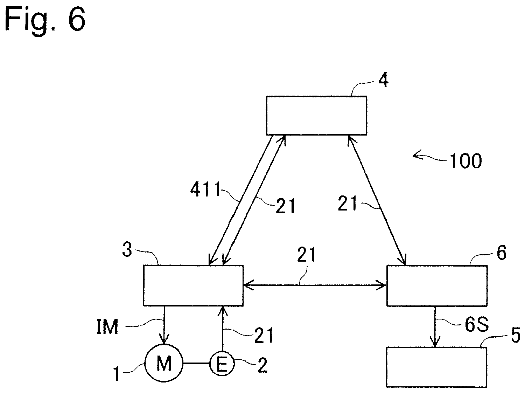

Fig. 6 is a control block view associated with this embodiment. Basically the same effects and function to the previous first embodiment are obtained in this embodiment and common parts of the structure are referenced as the same numerals or symbols to the parts in the first embodiment and explanation will be made for the parts different in structure and function from the previous embodiments. According to this embodiment, the servo drive 3, the servo controller 4 and the trigger signal generating device 6 are connected through a network for being capable of transmitting or receiving the position information 21. In this regard, the trigger signal generating device 6 includes individual CPU and memory (not shown) and by executing the program stored in the memory, the trigger signal 6S can be outputted similar to the manner in the first embodiment.

The communication means and protocol therefor are not limited to a particular means or devices. For example, servo network can be used for forming the network. It is preferable for the servo network to have a synchronization communication function to comply with the requirements in IEC61491 or IEEE1394. Thus, a certain number of the data can be transmitted or received every predetermined cycle by means of the servo network. In this embodiment, the servo drive 3, the servo controller 4 and the trigger emission trigger signal generating device 6 are capable of mutually transmitting or receiving various data including the position information 21 and control signals at every predetermined cycle at the same timing. It is preferable for the servo network to have interrupt capabilities which can interrupt the activation periodically against each node connected to the servo drive 3. This can facilitate the synchronization driving among the plurality of servo motors.

According to this embodiment, since the servo drive 3, the servo controller 4 and the trigger signal generating device 6 commonly have the position information 21 through the servo network, generation of delays of transmitting delay of the servo network and synchronization delay of the position information 21 may be possible to occur. However, the servo side delay time T2 is set in consideration of these delays and accordingly, the external device 5 can be highly accurately started the operation at the desired operation starting position PS.

It is noted here that in Fig. 6 the trigger signal generating device 6 is formed separately from the servo drive 3 and the servo controller 4. However, it is possible to house the trigger signal generating device 6 in either the servo drive 3 or the servo controller 4.

(3) External Device

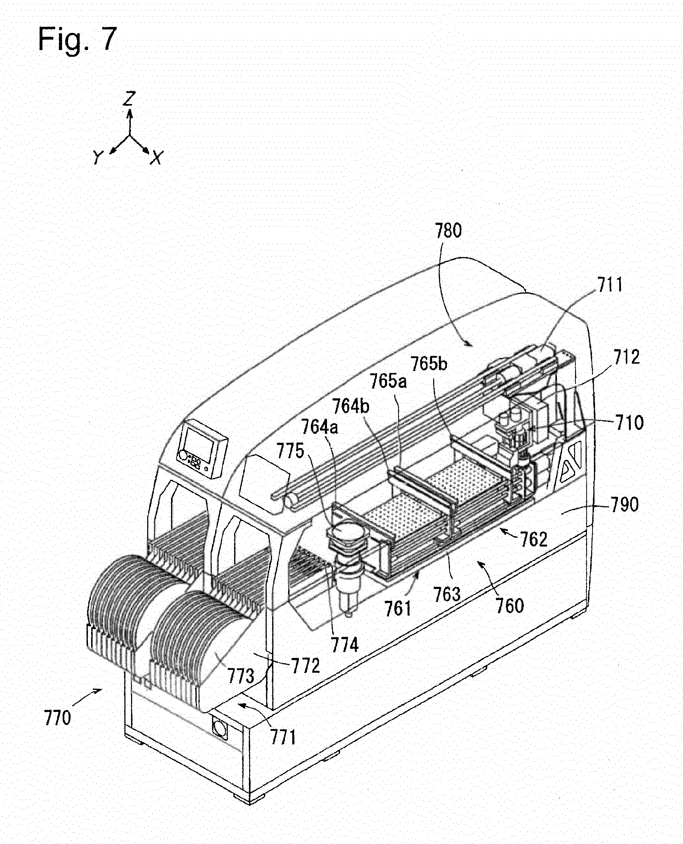

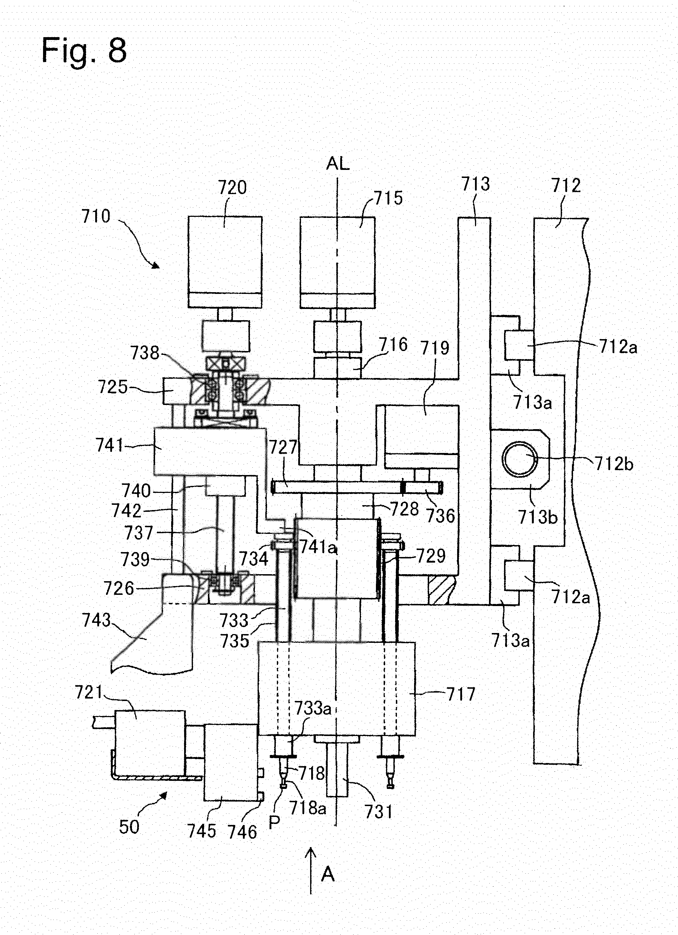

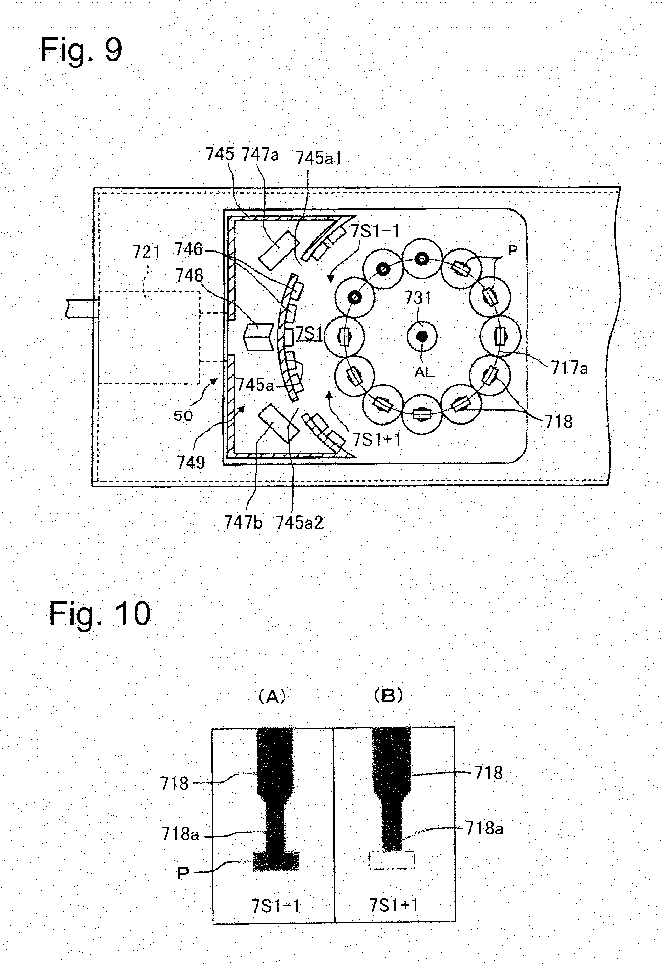

According to the first and the second embodiments, the external device 5 can be provided with, for example, an image taking means 50 of the component mounting device. Fig. 7 is a perspective view of an example structure of the component mounting device. Fig. 8 is a front view of an example of a component mounting head. Fig. 9 is a view showing an "A" arrow direction of Fig. 8. Fig. 10 is a view showing an example of a side surface image.

The component mounting device 770 includes a component supply device 770, a substrate delivery device 760 and a component transfer device 780. The component supply device 770 is formed by arranging a plurality of cassette type feeders 771 in parallel on a base frame 790. The plurality of cassette type feeders 771 is provided with a main body 772 detachably attached on the base frame 790, a supply reel 773 provided at a rear portion of the main body 772 and a component taking-out portion 774 provided at the tip end of the main body 772. An elongated tape, in which an electronic component P is sealed, is wound on the supply reel 773 at a predetermined pitch. The tape is drawn from the reel by means of a sprocket (not shown) at a predetermined pitch and the electronic component is unsealed and in turn fed to the component taking-out portion 774.

A component camera 775 is disposed between the component supply device 770 and the substrate delivery device 760 for detecting the holding position of the electronic component P. The component camera 775 can detect the off-sets of position and angle of the electronic component P suctioned by later explained suction nozzle 18 relative to the position of the suction nozzle 18. The result of detection of off-sets is used when correcting the position of the mounting position of the electronic component P.

The substrate delivery device 760 is used for delivering the printed substrates in an X-axis direction in Fig. 7 and is of double conveyer type arranging first and second delivery devices 761 and 762 in parallel in two tows. The first and the second substrate delivery devices 761 and 762 are formed by a pair of guide rails 764a, 764b; 765a, 765b, provided on the base 763, facing with each other in parallel horizontally and a pair of conveyer belts (not shown) provided facing with each other in parallel and delivering the printed substrates supported thereon and guided by the pair of guide rails 764a, 764b; 765a, 765b, respectively. The substrate delivery device 760 is further provided with a clamp device (not shown) which pushes up the substrate to a predetermined position and fixes the position for mounting the substrate.

The component transfer device 780 is of X-Y robot type and is installed on the base 790. The component transfer device 780 is positioned upwardly relative to the position of substrate delivery device 760 and the component supply device 770 and is provided with a Y-axis slider 712 which moves in a Y-axis direction by a Y-axis servo motor 711. An X-axis slider 713 is guided by the Y-axis slider 712 as shown in Fig. 8. The X-axis slider 713 is movably guided by the Y-axis slider 712 in a direction perpendicular to the Y-axis direction.

The X-axis slider 713 is movably held on the Y-axis slider 712 through a pair of guide rails 712a fixed on the Y-axis slider 712 and extending in an X-axis direction and a pair of guide blocks 713a fixed to the X-axis slider 713. An X-axis servo motor (not shown) is fixed to the Y-axis slider 712 and output shaft of the X-axis servo motor is connected to a ball screw shaft 712b extending in an X-axis direction. The ball screw shaft 712b is screwed with a ball nut 713b fixed to the X-axis slider 713 through balls (not shown). Thus, when the X-axis servo motor is rotated, the ball screw shaft 712b is rotated and the X-axis slider 713 moves in an x-axis direction guided by the guide rails 712a through the ball nut 713b.

The component mounting head 710 is attached on the X-axis slider 713 for mounting the electronic component P onto the printed substrate by suction. The component mounting head 710 is formed as shown in Fig. 8 by an R-axis motor 715, an index shaft 716, a nozzle holder 717, a suction nozzle 718, $\theta$-axis motor 719, Z-axis motor 720 and the image taking means 50 including a CCD camera 721.

The X-axis slider 713 is provided with a first and a second frame 725 and 726 integrally formed separately from each other in an up-down direction (Z-axis direction). The R-axis motor 715 is fixed to the first frame 725 and output shaft of the R-axis motor 715 is connected to the index shaft 716 which is rotatably supported thereon in a vertical axis direction AL (R-axis direction). A rotating body 728 formed by a follower gear 727 and a $\theta$-axis gear 729 is rotatably supported on the index shaft 716. A cylindrical nozzle holder 717 forming the revolver head is fixed to the lower end of the index shaft 716.

A plurality of suction nozzles 718 are movably supported in an Z-axis direction on the nozzle holder 717 on a circumference 717a of circle co-centric with the vertical axis line AL as shown in Fig. 9. Each suction nozzle 718 is attached to a lower end portion of the nozzle spindle 733 supported on the nozzle holder 717 slidably in a Z-axis direction. The nozzle spindle 733 has a large diameter portion 733a at the lower end portion and a nozzle gear 734 is fixed to the nozzle spindle 733 at the upper end portion thereof. A compression spring 735 is disposed between the nozzle gear 734 and the nozzle holder 717 and the nozzle spindle 733 and the suction nozzles 718 are biased by the compression spring 735 upwardly. The large diameter portion 733a is brought into contact with the lower surface of the nozzle holder 717 thereby to restrict the upward movement of the nozzle spindle 733 and the suction nozzles 718. Each suction nozzle 718 is supplied with a vacuum from the suction nozzle drive device (not shown). Accordingly, the suction nozzles 718 can suction the electronic component P at the tip end 718a.

A cylindrical light-reflective member 731 is fixed to the central portion of the lower end of the nozzle holder 717. Thus, the nozzle holder 717 and the light-reflective member 731 are rotated about the vertical axis line AL together with the index shaft 716. When the R-axis motor 715 is rotated, the nozzle holder 717, which holds the plurality of suction nozzles 718, is rotated about the vertical axis line AL (R-axis direction) through the index shaft 716. Thus, the plurality of suction nozzles 718 can be plotted and delivered onto the mounting station 7S1 in turn.

The θ-axis motor 719 is fixed to the first frame 725 and a drive gear 736 is fixed to the output shaft of the θ-axis motor 719. The drive gear 736 engages with the follower gear 727 on the rotating body 728 which is rotatably supported on the index shaft 716. Further, the θ-axis gear 729 is formed on the rotating body 728 over a predetermined length in an axial direction. The θ-axis gear 729 is slidably engaged with each nozzle gear 734 fixed to the nozzle spindle 733. Therefore, when the θ-axis motor 719 is rotated, all of the suction nozzles 718 are rotated relative to the nozzle holder 717 through the drive gear 736, the follower gear 727, the θ-axis gear 729 and the nozzle gear 734.

Further, the Z-axis motor 720 is fixed to the first frame 725 and the output shaft of the Z-axis motor 720 is connected to the ball screw shaft 737. The output shaft of the Z-axis motor 720 is connected to the ball screw shaft 737. The ball screw shaft 737 is rotatably supported on the bearing 738 fixed to the first frame 725 and the bearing 739 fixed to the second frame 726 about an axis line parallel to the vertical axis line AL. The ball screw shaft 737 engages with a ball nut 740 which converts the rotation movement into the linear movement of the Z-axis motor 720 through the balls (not shown). The ball nut 740 is fixed to the nozzle lever 741 which is slidably movably in a vertical direction and is guided by the guide 742 fixed to the first and the second frames 725 and 726 and extending in an up-down direction.

The nozzle lever 741 is provided with a pressing portion 741a which presses the nozzle spindle 735 downwardly in the Z-axis direction by contacting the upper portion of the nozzle spindle 733 plotted on the mounting station 7S1. Thus, when the Z-axis motor 720 is rotated, the ball screw shaft 737 is rotated and the nozzle lever 741 is moved in up-down direction guided by the guide 742 through the ball nut 740. When the nozzle lever 741 is moved in up-down direction, the nozzle spindle 733 and the suction nozzle 718 positioned corresponding to the pressing portion 741a are moved in up down direction according to the movement of the pressing portion.

The pressing portion 741a has a predetermined width centering about the mounting station 7S1 in the rotation direction of the nozzle holder 717 and is capable of contacting the upper end of the nozzle spindle 733 under the suction nozzle 718 being positioned in a predetermined angle range of the front and rear of the mounting station 7S1. Therefore, within the predetermined angle range of the front and rear of the mounting station 7S1 the suction nozzle 718 can be movable in up-down direction (Z-axis direction) during the rotation of nozzle holder 717.

A support bracket 743 is held by the second frame 726 and a CCD camera 721 is fixed to the support bracket 743 which takes the two dimensional image of the electronic component P suctioned to the tip end 718a of two plotted suction nozzles 718 by the stations 7S1-1 and 7S1+1 of immediately before and after the mounting station 7S1 of the nozzle holder 717. The CCD camera 721 can take the two dimensional image of the electronic component P suctioned at the tip end 718a of the suction nozzle 718 by the light reflected by the light-reflective member 731.

An image taking case body 745 is fixed to one side, corresponding to the suction nozzle 718, of the support bracket 743 and an arc shaped wall surface 745a centering on the vertical axis line AL is formed over the mounting station 7S1 of the nozzle holder 717 at immediately before 7S1-1 and after 7S1+1 the mounting thereof at the side facing the light-reflective member 731, surrounding around the nozzle holder 717 as shown in Fig. 9. A plurality of irradiation elements 746 is provided on the arc shaped wall surface 745a of the image taking case body 745. The irradiation elements 746 are formed by LEDs which irradiate light towards the light-reflective member 731. Two incident portions 745a1 and 745a2 are provided on the arc shaped wall surface 745a and opened at the positions corresponding to the positions of immediately before 7S1-1 and after 7S1+1 of the mounting station 7S1. A first prism formed by two prisms 747a and 747b which incidents reflected light from the light-reflective member 731 via the incident portions 745a1 and 745a2 and a chevron shaped second prism 748 which incidents the refracted light refracted by the first prism 747a and 747b and refracts the refracted light to be in parallel towards the CCD camera 721 are housed in the image taking case body 745.

The first prism 747a and 747b and the second prism 748 form an optical mechanism 749 which introduces the reflected light, irradiated from the irradiation elements 746 and reflected by the light-reflective member 731, into the CCD camera 721. Further, the light-reflective member 731, irradiation elements 746, the first and the second prisms 747a, 747b and 748 and the CCD camera 721 form the image taking means 50 which takes the image of side surface of the two tip end portions 718a of the two suction nozzles 718 which are positioned at the mounting station 7S1 at the immediately before and after positions 7S1-1 and 7S1+1.

Under the two suction nozzles 718 plotted at the mounting station 7S1 at the immediately before and after positions 7S1-1 and 7S1+1 of the nozzle holder 717 by the image taking means 50 being positioned and stopped at the raised end, the light irradiated from the irradiation elements 746 is reflected by the light-reflective member 731 and passes through outer peripheral brim of the electronic component P and the two incident portions 745a1 and 745a2 of the image taking case 745 and polarized to the light towards the second prism 748 by the first prism 747a and 747b and then polarized to be the parallel light towards the CCD camera 721 by the second prism 748 and finally the image is recognized by the CCD camera 721. Thus, the two two-dimensional images of two electronic components P suctioned at the two tip end portions 718a of the two suction nozzles 718 plotted at the mounting stations 7S1-1 and 7S1+1 are simultaneously taken by one single CCD camera 721.

The component mounting device is controlled by a control device (not shown). The control device includes an image recognition means which recognizes the side surface image of the suction nozzle 718 taken by the image taking means 50, an overlap control means for controlling the R-axis motor 715 and the Z-axis motor 720 and a sequence control means. The overlap control means can control overlapping of the operations (simultaneous operation control) of the R-axis motor 715 and the Z-axis motor 720. The sequence control means controls the R-axis motor 715 and the Z-axis motor 720 in sequent.

The operation of the mounting of the electronic component P on the printed substrate by the component mounting device will be explained hereinafter. First, based on the instructions from the control device the belt conveyer of the substrate delivery device is driven and the printed substrate is delivered to a predetermined position guided by the guide rails 764a and 764b (765a and 765b). then the printed substrate is pushed up and clamped by the clamp device to be fixed to the predetermined position. Next, the Y-axis slider 712 and the X-axis slider 713 are moved by the driving operation of the Y-axis servo motor 711 and the X-axis servo motor (not shown) and the component mounting head 710 is moved to the component taking out portion 774. Thereafter the R-axis motor 715 is rotated by the control device and the nozzle holder 717 is rotated accordingly. The nozzle spindle 733 which installs a predetermined nozzle 718 is plotted downward of the pressing portion 741a of the nozzle lever 741.

The Z-axis motor 720 is rotated in clockwise by the control device and the nozzle lever 741 is pushed down overcoming the biasing force of the compression spring 735 and the tip end portion 718a of the suction nozzle 718 is pushed down via the nozzle spindle 733 to the position where the electronic component P delivered to the component taking out portion 774 approaches. Under such position, vacuum pressure is supplied to the suction nozzle 718 from the suction nozzle drive device (not shown) and the electronic component P is held at the tip end portion 718a of the suction nozzle 718 by the vacuum pressure. Thereafter the Z-axis motor 720 is rotated in counterclockwise to move the nozzle lever 741 upward and the suction nozzle 718 is pushed upward to a raised end position by the biasing force of the compression spring 735. By repeating the operation, the plurality of electronic components P is held by suction to the plurality of suction nozzles 718.

Next, by driving the Y-axis servo motor 711 and the X-axis servo motor (not shown), the Y-axis slider 712 and the X-axis slider 713 are moved and the component mounting head 710 is moved to the upward of the mounting position of the printed substrate. Next, by the rotation of θ-axis motor 719, the posture of the electronic component P which is suctioned and held at the tip end portion 718a of the suction nozzle 718 plotted at the mounting station 7S1 of the nozzle holder 717 is controlled to a predetermined posture and at the same time by rotation of the Z-axis motor 720 in clockwise, the nozzle lever 741 is pushed down overcoming the biasing force of the compression spring 735. Thereafter, by the rotation of the Z-axis motor 720 in counterclockwise, the nozzle lever 741 is moved upward and pushed upward so that the suction nozzle 718 positions at the uppermost end by the biasing force of the compression spring 735.

By the downward operation of the suction nozzle 718 plotted on the mounting station 7S1, the mounting of the electronic component P to the printed substrate. According to the embodiment of the invention, while the electronic component P is mounted, the side surface images of two tip end portions 718a of the two suction nozzles 718 positioned and stopped at the predetermined positions 7S1-1 and 7S1+1 of the mounting station 7S1 immediately before and after the mounting are taken by the image taking means 50 and the two taken side surface images are inputted to the image recognition means and recognized.

Thus, while the electronic component P suctioned at the suction nozzle 718 plotted on the mounting station 7S1 is mounted on the printed substrate, by obtaining the two side surface images of the tip end portions 718a of the two suction nozzle 718 plotted on the mounting station 7S1 at the positions 7S1-1 and 7S1+1 of immediately before/after the mounting, the movement of the suction nozzles 718 in an up and down direction during the plotting rotation operation for the next nozzle holder 717 can be performed simultaneously (overlap control). In other words, by the lowering operation of the nozzle spindle 733 plotted on the mounting station 7S1, while the electronic component P suctioned to the suction nozzle 718 is mounted on the printed substrate, the two side surface images of the two suction nozzles 718 which has been positioned and stopped on the predetermined positions 7S1-1 and 7S1+1 of the mounting station 7S1 can be taken by the image taking means 50 and such taken images are inputted to the image recognition means for image recognition.

The light irradiated from the irradiation elements 746 is reflected by the light-reflective member 731 and passes through the outer peripheral brims of the electronic components P suctioned by the two suction nozzles 718 and the incident portions 745a1 and 745a2 and incidents to the CCD camera 721. Therefore, two darkened side surface images (two dimensional image) of the electronic component P and the tip end portion 718a of the suction nozzle 718 can be taken with the portion of the light-reflective member 731 serving as a bright background as shown in Fig. 10.

The side surface image of the tip end portion 718a of the suction nozzle 718 positioned at the mounting station 7S1-1 which is the position immediately before the mounting is processed to a binary two dimensional image data of grayscale or black-white (See Fig. 10 (A)) to calculate the distance between the tip end portion 718a of the suction nozzle 718 and the electronic component P. The difference (i.e., position deviation) between thus calculated data and the reference position data from the tip end portion 718a to the electronic component P which was calculated in advance at the time of designing stage is obtained and compared to a threshold value. As the result, if the position deviation exceeds the threshold value, such case is considered to be a suction error of the electronic component P to the suction nozzle 718 (non-existence of electronic component P or abnormal suction posture). If the "position deviation" is within the threshold value, the suction is considered to be normally performed. It is noted that the "abnormal posture of the electronic component P" means that the suction posture of the electronic component P is not in the allowable range for mounting the component P to the printed substrate. The "position deviation" data is memorized in the memory area of the control device and used as the correction amount upon mounting of the electronic component P to the printed substrate.

On the other hand, the judgment whether the electronic component P is properly mounted on the printed substrate by the suction nozzle 718 or not is made based on the side surface image of the tip end portion 718a of the suction nozzle 718 positioned at the mounting station 7S1+1 which is the position immediately after the mounting (See Fig. 10 (B)). In other words, if the electronic component P is not on the tip end portion 718a of the suction nozzle 718, the electronic component P is considered to have been correctly mounted on the printed substrate. However if the electronic component P is still on the tip end portion 718a of the suction nozzle 718, the mounting is considered to be abnormal and re-trial of mounting of the electronic component to the printed substrate is performed.

The detection of the holding position of the electronic component P by the suction nozzle 718 can be performed by a component camera 775. After the electronic component P has been suctioned by the suction nozzle 718, the Y-axis servo motor 711 and the X-axis servo motor (not shown) are rotated to move the component mounting head 710 upward of the component camera 775. At this time the image of the electronic component P suctioned by the suction nozzle 718 is taken and after the image taken, the component mounting head 710 is moved upward to the mounting position for the printed substrate.

According to this embodiment, since the component mounting device includes the image taking means 50, the image of the electronic component P suctioned by the suction nozzle 718 which is operated in synchronization with the servo motor can be accurately taken at the predetermined position. Further, according to the embodiment, the rotation plotting of the nozzle holder 717 and the advance/retreat movement of the suction nozzle 718 are simultaneously controlled to be performed (overlap control). As explained, even the rotation movement and the linear movement are simultaneously made, the image of the electronic component P suctioned by the suction nozzle 718 can be taken accurately at the predetermined position. It is noted that under the sequential control that the rotation movement and the linear movement are individually made, the image of the electronic component P suctioned by the suction nozzle 718 can be taken accurately at the predetermined position.

(Others).

Obviously, numerous modifications and variations of the present invention are possible in light of the above teachings. It is therefore to be understood that within the scope of the appended claims, the present invention may be practiced otherwise than as specifically described herein.

APPLICABILITY FOR INDUSTRY

The system comprising the trigger signal generating device 6 according to the invention can be applicable to various substrate related work devices/appliances including the component mounting device. The 'system comprising the trigger signal generating device 6 according to the invention can be applicable to a substrate related work devices/appliances used other than the component mounting device and further applicable to other industrial assembling machines or the industrial machining tools.

EXPLANATION OF REFERENCE NUMERALS

In the drawings:
1:servo motor, 2; position detecting device, 3; servo drive, 4; servo controller, 5; external device, 6; trigger signal generating device, 61; speed presuming portion, 62; arrival required time calculating portion, 63; timer setting time calculating portion, 64; trigger signal outputting portion.

**Claims**

1. A system comprising a servo system including a servo motor, a position detecting device (2) for detecting the position of the servo motor, a servo drive (3) for driving the servo motor and a servo controller (4) which controls the servo drive, the system further comprising a trigger signal generating device for outputting a trigger signal which gives instructions on operation to an external device (5) operated in synchronization with the servo motor (1)

wherein the trigger signal generating device (6) comprises

a timer setting time calculating portion (63) for calculating a timer setting time (TMS) by subtracting a servo side delay time (T2) and an external device side delay time (T3) from a time (T1) required until the external device arrives at an operation starting position (PS) which is calculated based on position information (21) of the servo motor (1) and

a trigger signal outputting portion (64) for outputting the trigger signal based on the timer setting time,

wherein the servo side delay time is defined to be a time period that is required from a time when sampling by the position detecting device (2) starts to a time when calculation of the timer setting time for generating the trigger signal is completed and the external device side delay time is defined to be a time period from a time when the trigger signal is outputted by the trigger signal outputting portion (64) to a time when the external device starts operation and

wherein the servo drive (3), the servo controller (4), the trigger signal generating device (6) and the position detecting device (2) are communicably connected for receiving the position information (21) of the servo motor (1) and

wherein the servo drive (3) includes a CPU (300), a memory (301), an input/output interface (302, 303) and a communication interface (304) which are mutually connected with each other via a bus (305) and wherein the CPU (300) transmits the position information (21) sent from the position detecting device (2) to the memory (301) and further to the servo controller (4) via the bus (305) and the communication interface (304) and

wherein the servo controller (4) includes a CPU (400), a memory (401) and a communication interface (402) which are mutually connected by a bus (403) and wherein the position information (21) received from the servo drive (3) is sent to the memory (401) via the bus (403) and the communication interface (402).

2. The trigger signal generating device according to claim 1, wherein the trigger signal outputting portion (64) of the trigger signal generating device (6) outputs the trigger signal (6S) *after the timer setting time elapsed when the timer setting time is a positive value* and outputs the trigger signal (6S) immediately after the timer setting time (TMS) was calculated when the timer setting time is zero or a negative value.

ue.

3. The trigger signal generating device according to any of claims 1 or 2, wherein the trigger signal generating device (6) is provided at the servo drive (3).

4. The trigger signal generating device according to any of claims 1 through 3, wherein the external device (5) includes an image taking means (50) of a component mounting device (770).

**Patentansprüche**

1. System mit einem Servosystem, das einen Servomotor (1), eine Positionserfassungsvorrichtung (2) zum Erfassen der Position des Servomotors (1), einen Servoantrieb (3) zum Antreiben des Servomotors (1) und eine Servosteuerung (4), die den Servoantrieb (3) steuert, umfasst, wobei das System ferner eine Triggersignal-Erzeugungsvorrichtung (6) zum Ausgeben eines Triggersignals umfasst, das Anweisungen zum Betrieb an ein externes Gerät (5) gibt, die synchron mit dem Servomotor (1) betrieben wird,

wobei die Triggersignal-Erzeugungsvorrichtung (6) umfasst

einen Zeitgebereinstellzeit-Berechnungsabschnitt (63) zum Berechnen einer Zeitgebereinstellzeit (TMS) durch Subtrahieren einer servoseitigen Verzögerungszeit (T2) und einer externgerätseitigen Verzögerungszeit (T3) von einer Zeit (T1), die erforderlich ist, bis das externe Gerät (5) ankommt an einer Betriebsstartposition (PS), die basierend auf Positionsinformationen (21) des Servomotors (1) berechnet wird, und

einen Triggersignal-Ausgabeabschnitt (64) zum Ausgeben des Triggersignals basierend auf der Zeitgebereinstellzeit,

wobei die servoseitige Verzögerungszeit definiert ist als eine Zeitdauer, die erforderlich ist von einem Zeitpunkt, zu dem Abtastung durch die Positionserfassungsvorrichtung (2) beginnt, bis zu einem Zeitpunkt, zu dem die Berechnung der Zeitgebereinstellzeit zum Erzeugen des Triggersignals abgeschlossen ist, und die externgerätseitige Verzögerungszeit ist definiert als eine Zeitdauer von einem Zeitpunkt, an dem das Triggersignal von dem Triggersignal-Ausgabeabschnitt (64) ausgegeben wird, bis zu einem Zeitpunkt, an dem das externe Gerät (5) den Betrieb aufnimmt, und wobei der Servoantrieb (3), die Servosteuerung (4), die Triggersignal-Erzeugungsvorrichtung (6) und die Positionserfassungsvorrichtung (2) zum Empfangen der Positionsinformationen (21) des Servomotors (1) kommunizierbar verbunden sind und

wobei der Servoantrieb (3) eine CPU (300), einen Speicher (301), eine Eingabe/Ausgabe-Schnittstelle (302, 303) und eine Kommunikationsschnittstelle (304) enthält, die über einen Bus (305) miteinander verbunden sind, und wobei die CPU (300) die von der Positionserfassungsvorrichtung (2) gesendeten Positionsinformationen (21) über den Bus (305) und die Kommunikationsschnittstelle (304) an den Speicher (301) und weiter an die Servosteuerung (4) überträgt und

wobei die Servosteuerung (4) eine CPU (400), einen Speicher (401) und eine Kommunikationsschnittstelle (402) enthält, die über einen Bus (403) miteinander verbunden sind, und wobei die Positionsinformationen (21), die vom Servoantrieb (3) empfangen werden, über den Bus (403) und die Kommunikationsschnittstelle (402) an den Speicher (401) gesendet werden.

2. Triggersignal-Erzeugungsvorrichtung nach Anspruch 1, wobei der Triggersignal-Ausgabeabschnitt (64) der Triggersignal-Erzeugungsvorrichtung (6) das Triggersignal (6S) ausgibt, nachdem die Zeitgebereinstellzeit verstrichen ist, wenn die Zeitgebereinstellzeit ein positiver Wert ist, und das Triggersignal (6S), unmittelbar nachdem die Zeitgebereinstellzeit (TMS) berechnet wurde, ausgibt, wenn die Zeitgebereinstellzeit Null oder ein negativer Wert ist.

3. Triggersignal-Erzeugungseinrichtung nach einem der Ansprüche 1 oder 2, wobei die Triggersignal-Erzeugungseinrichtung (6) am Servoantrieb (3) vorgesehen ist.

4. Triggersignal-Erzeugungsvorrichtung nach einem der Ansprüche 1 bis 3, wobei das externe Gerät (5) eine Bildaufnahmeeinrichtung (50) einer Bestückungsvorrichtung (770) für Komponenten enthält.

**Revendications**

1. Système comprenant un servosystème incluant un servomoteur, un dispositif de détection de position (2) pour détecter la position du servomoteur, une servocommande (3) pour commander le servomoteur et un servocontrôleur (4) qui contrôle la servocommande, le système comprenant en outre un dispositif de génération de signal déclencheur pour générer un signal déclencheur qui donne des instructions sur un fonctionnement d'un dispositif extérieur (5) exploité en synchronisation avec le servomoteur (1)

dans lequel le dispositif de génération de signal de déclencheur (6) comprend

une partie de calcul de durée de réglage de minuteur (63) pour calculer une durée de réglage de minuteur (TMS) en soustrayant une durée de délai côté servo (T2) et une durée de délai côté dispositif extérieur (T3) à une durée (T1) nécessaire jusqu'à ce que le dispositif extérieur arrive à une position de démarrage (PS) qui est calculée selon des informations de position (21) du servomoteur (1) et

une partie de génération de signal déclencheur (64) pour générer le signal déclencheur selon la durée de réglage de minuteur,

dans lequel la durée de délai côté servo est définie comme étant une période temporelle qui est nécessaire d'un moment où un échantillonnage par le dispositif de détection de position (2) démarre à un moment où un calcul de la durée de réglage de minuteur pour générer le signal déclencheur est terminé et la durée de retard côté dispositif extérieur est définie comme étant une période temporelle d'un moment où le signal déclencheur est généré par la partie de génération de signal déclencheur (64) à un moment où le fonctionnement du dispositif extérieur commence et

dans lequel la servocommande (3), le servocontrôleur (4), le dispositif de génération de signal déclencheur (6) et le dispositif de détection de position (2) sont connectés en communication pour recevoir les informations de position (21) du servomoteur (1) et

dans lequel la servocommande (3) inclut une UC (300), une mémoire (301), une interface entrée/sortie (302, 303) et une interface de communication (304) qui sont mutuellement connectées les unes aux autres via un bus (305) et dans lequel l'UC (300) transmet les informations de position (21) envoyées depuis le dispositif de détection de position (2) à la mémoire (301) et en outre au servocontrôleur (4) via le bus (305) et l'interface de communication (304) et

dans lequel le servocontrôleur (4) inclut une UC (400), une mémoire (401) et une interface de communication (402) qui sont mutuellement connectées les unes aux autres par un bus (403) et dans lequel les informations de position (21) reçues de la servocommande (3) sont envoyées à la mémoire (401) via le bus (403) et l'interface de communication (402).

2. Le dispositif de génération de signal déclencheur selon la revendication 1, dans lequel la partie de génération de signal déclencheur (64) du dispositif de génération de signal déclencheur (6) génère le signal déclencheur (6S) *après que la durée* de *réglage de minuteur s'est écoulée lorsque la durée* de *réglage de minuteur est une valeur positive* et génère le signal déclencheur (6S) immédiatement après que la durée de réglage de minuteur (TMS) a été calculée lorsque la durée de réglage de minuteur est zéro ou une valeur négative.

3. Le dispositif de génération de signal déclencheur selon l'une quelconque de la revendication 1 ou 2, dans lequel le dispositif de génération de signal déclencheur (6) est disposé au niveau de la servocommande (3).

4. Le dispositif de génération de signal déclencheur selon l'une quelconque des revendications 1 à 3, dans lequel le dispositif extérieur (5) inclut un moyen de prise d'image (50) d'un dispositif de montage de composants (770).

Fig. 1

Fig. 2

# Fig. 3

# Fig. 4

```
        ┌─────────────┐
        │    START    │
        └─────────────┘
               │
               ▼                          ┌─ S10
    ┌──────────────────────────────┐
    │ Obtain position information 21│
    └──────────────────────────────┘
               │
               ▼                          ┌─ S11
    ┌──────────────────────────────┐
    │ Presume external device 5 speed│
    └──────────────────────────────┘
               │
               ▼                          ┌─ S12
    ┌──────────────────────────────┐
    │ Calculate arrival required time T1│
    └──────────────────────────────┘
               │
               ▼                          ┌─ S13
    ┌──────────────────────────────┐
    │ Calculate timer setting time TMS│
    └──────────────────────────────┘
               │
               ▼                          ┌─ S14
          ◇─────────────────◇  No
          Timer setting time TMS＞0 ──────────────┐
          ◇─────────────────◇                     │
               │ Yes                               │
               ▼          ┌─ S15                   ▼          ┌─ S16
    ┌──────────────────────┐        ┌──────────────────────┐
    │      Set Timer /      │        │       Output          │
    │ Output trigger signal 6S│      │  trigger signal 6S    │
    └──────────────────────┘        └──────────────────────┘
               │                                  │
               ▼◄─────────────────────────────────┘
        ┌─────────────┐
        │     END     │
        └─────────────┘
```

# Fig. 5

Fig. 6

Fig. 7

# Fig. 8

# Fig. 9

# Fig. 10

(A)  (B)

718

718a

P

7S1-1

718

718a

7S1+1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8194541 A

- JP 2010044449 A